# EUROPEAN PATENT APPLICATION

(11) **EP 3 855 641 A1**
(43) Date of publication of application: **28.07.2021**
(21) Application number: 18937816.9
(22) Date of filing: 22.10.2018
(51) Int. Cl.: H04B 7/15, H04B 7/06, H04W 16/26, H04W 16/28

(54) **WIRELESS RELAY APPARATUS AND WIRELESS COMMUNICATION SYSTEM**

(71) Applicant: Mitsubishi Electric Corporation, Tokyo 100-8310 (JP)
(72) Inventor: TAIRA, Akinori, Tokyo 100-8310 (JP)
(74) Representative: Pfenning, Meinig & Partner mbB
(86) International application number: PCT/JP2018/039233
(87) International publication number: WO 2020/084672

(57) **Abstract**

A wireless relay device (20) includes: a first antenna unit (21-1 to 21-N and 22-1 to 22-N) capable of forming a plurality of first beams for communication with a base station; and a second antenna unit (25-1 to 25-N and 27-1 to 27-N) capable of forming a plurality of second beams for communication with a terminal device. The plurality of first beams and the plurality of second beams are linked with each other, and the wireless relay device relays communication between the base station and the terminal device using the first beams and the second beams linked.

## Description

### Field

The present invention relates to a wireless relay device including a plurality of antenna elements and to a wireless communication system including the wireless relay device.

### Background

In recent years, cellular systems have become widespread. There is a strong need from users to use communication services at all times regardless of time and location; therefore, ensuring coverage of communication services is an important factor. However, a cellular system is constituted by communication devices that use radio waves. For this reason, undetectable areas that radio waves do not reach may occur indoors, underground, under elevated structures, in cities, between buildings, and the like, in which case coverage cannot be ensured. For the purpose of eliminating such undetectable areas, wireless relay devices have been conventionally used to ensure coverage, in addition to communication devices constituting a cellular system. Wireless relay devices relay outdoor-indoor communication so that coverage can be ensured. Wireless relay devices also relay communication between areas in which base stations can communicate and areas behind buildings in which base stations cannot communicate so that coverage can be ensured.

The fifth generation mobile communication technology (5G) has been developed to use a large-scale multiple-input and multiple-output (MIMO) system, in which base stations and terminal devices are equipped with a large number of antenna elements, in order to implement multi-user-MIMO (MU-MIMO). MU-MIMO is a transmission scheme that uses a narrow beam to perform spatial multiplexing transmission to a plurality of terminal devices on the same channel and at the same time. The large-scale MIMO system has been designed to use radio waves in the high frequency band exceeding 10 GHz. A problem pertaining to the use of radio waves in the high frequency band is propagation attenuation. To alleviate this problem, high-gain beams are used in the large-scale MIMO system. That is, 5G is expected to universally support MU-MIMO with high-gain narrow beams.

Radio waves in the high frequency band have small diffraction and wraparound properties, and thus are significantly lost upon entry from outdoor to indoor environments. For this reason, it is difficult for 5G to ensure coverage of a plurality of terminal devices located indoors or behind buildings by outdoor macro base stations, unlike conventional cellular systems that use radio waves in the low frequency band below 6 GHz. A possible way to deal with this problem is to install small base stations indoors or behind buildings, which leads to another problem: a large number of base stations are required to overcome the narrow coverage of cells. A cell is the communication range of a small base station. In addition, operating a large number of base stations in close areas is also problematic in terms of interference between stations, and thus can be difficult to implement due to both cost and technical limitations.

Another possible way to ensure coverage in 5G is the utilization of wireless relay devices, as has been conventionally practiced. In this case, in order to use MU-MIMO intended for 5G, wireless relay devices need to support narrow-beam communication and higher-order spatial multiplexing.

Patent Literature 1 discloses a wireless relay device that improves a transmission environment between a base station and a terminal device that has difficulty in direct communication with the base station. The wireless relay device described in Patent Literature 1 includes a donor antenna for communicating with the base station and a coverage antenna for communicating with the terminal device. The donor antenna provided in the wireless relay device described in Patent Literature 1 includes a plurality of antenna elements and has directivity. In general, a donor antenna can achieve better reception quality than an antenna having no directivity by directing the main lobe toward a base station at the time of installation. Further, the wireless relay device described in Patent Literature 1 adaptively improves the transmission environment in the event of a change in the surrounding radio wave propagation environment, such as the construction of a new building nearby, by changing the beam direction to the reflected wave direction in which radio waves from the base station are reflected by the new building, or to the direction of a different base station. The coverage antenna provided in the wireless relay device described in Patent Literature 1 is an omnidirectional antenna. In downlink communication, a signal from the base station received by a directional beam of the donor antenna is reradiated to the terminal device by the coverage antenna. In uplink communication, a signal from the terminal device received by the coverage antenna is reradiated to the base station by the donor antenna.

### Citation List

### Patent Literature

Patent Literature 1: Japanese Patent Application Laid-open No. 2011-228820

### Summary

### Technical Problem

However, the donor antenna of the wireless relay device described in Patent Literature 1 is a directional antenna capable of forming beams, whereas the coverage antenna of the wireless relay device described in Patent Literature 1 is an omnidirectional antenna. Therefore, the correlation between the antennas is so high that when signals are transmitted/received to/from the terminal device with the coverage antenna, a pinhole effect occurs, that is, the propagation paths degenerate into one. High correlation between antennas means that the properties of radio wave propagation on the propagation paths corresponding to different antennas are similar to each other. The pinhole effect makes it difficult to separate layers in MIMO communication, causing a problematic reduction in transmission capacity.

The present invention has been made in view of the above, and an object thereof is to obtain a wireless relay device that prevents a reduction in transmission capacity in MIMO communication.

### Solution to Problem

In order to solve the above-stated problem and achieve the object, a wireless relay device according to the present invention includes: a first antenna unit capable of forming a plurality of first beams for communication with a base station; and a second antenna unit capable of forming a plurality of second beams for communication with a terminal device. The plurality of first beams and the plurality of second beams are linked with each other, and the wireless relay device relays communication between the base station and the terminal device using the first beams and the second beams linked.

### Advantageous Effects of Invention

The wireless relay device according to the present invention can achieve the effect of preventing a reduction in transmission capacity in MIMO communication.

### Brief Description of Drawings

FIG. 1 is a diagram illustrating a configuration of a wireless communication system according to a first embodiment.
FIG. 2 is a diagram illustrating functional blocks of a wireless relay device according to the first embodiment.
FIG. 3 is a diagram illustrating a control circuit according to the first embodiment.
FIG. 4 is a flowchart illustrating the operation of the wireless communication system according to the first embodiment.
FIG. 5 is a diagram illustrating functional blocks of a wireless relay device according to a second embodiment.
FIG. 6 is a diagram illustrating an example of a 5G frame format according to a third embodiment.
FIG. 7 is a diagram illustrating how a base station according to the third embodiment transmits SS blocks.
FIG. 8 is a diagram illustrating a procedure for beam directivity formation by a wireless relay device according to the third embodiment.

### Description of Embodiments

Hereinafter, a wireless relay device and a wireless communication system according to embodiments of the present invention will be described in detail with reference to the drawings. The present invention is not limited to the embodiments.

### First Embodiment.

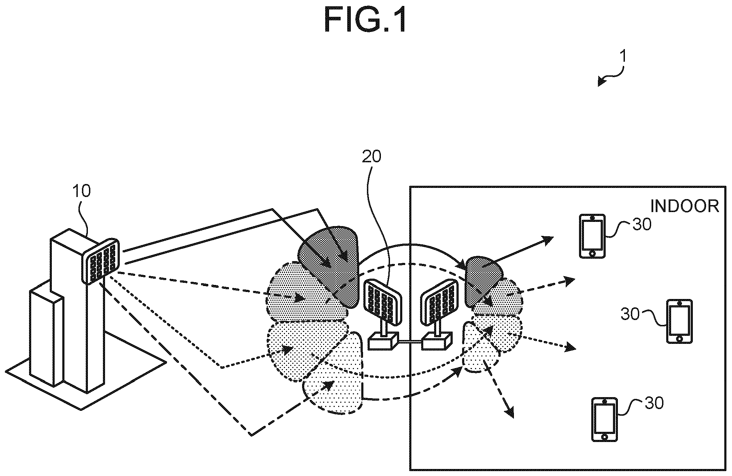

FIG. 1 is a diagram illustrating a configuration of a wireless communication system according to a first embodiment. A wireless communication system 1 includes a base station 10, a wireless relay device 20, and a plurality of terminal devices 30. The base station 10 forms a plurality of beams and communicates with the wireless relay device 20 using a MIMO transmission scheme. The wireless relay device 20 forms a plurality of reception beams corresponding to a plurality of beams from the base station 10. The wireless relay device 20 also forms a plurality of transmission beams for the terminal device 30, and uses the transmission beams for the terminal device 30 to transmit signals to the terminal device 30 without mixing signals received from the base station 10 on different reception beams. Therefore, the wireless relay device 20 associates signals received from the base station 10 on different reception beams with signals to be transmitted to the terminal device 30 on corresponding transmission beams, and relays communication between the base station 10 and the terminal device 30 according to the association, whereby highly-isolated propagation paths can be established between the base station 10, the wireless relay device 20, and the terminal device 30.

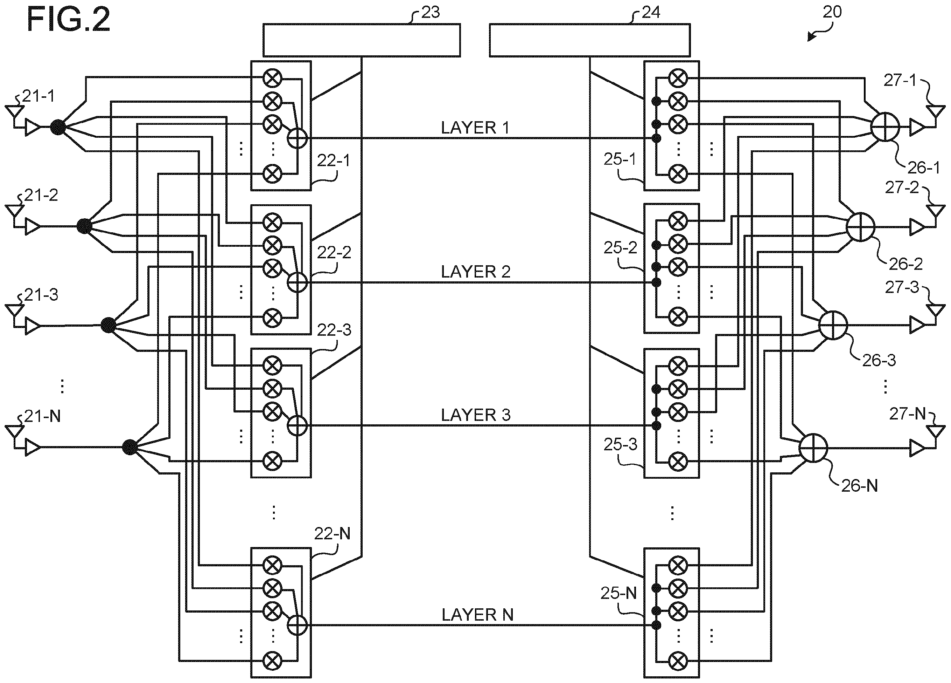

FIG. 2 is a diagram illustrating functional blocks of the wireless relay device 20 according to the first embodiment. The wireless relay device 20 performs both downlink relaying in which data are transferred from the base station 10 to the wireless relay device 20 and to the terminal device 30 and uplink relaying in which data are transferred from the terminal device 30 to the wireless relay device 20 and to the base station 10. A downlink is a downstream communication from the base station 10 to the terminal device 30. An uplink is an upstream communication from the terminal device 30 to the base station 10. The functional blocks of the wireless relay device 20 illustrated in FIG. 2 are adapted for downlink relaying. The functional block diagram illustrated in FIG. 2 represents an exemplary case in which the number of beams to be formed for the base station 10 is N and the number of beams to be formed for the terminal device 30 is N. That is, the functional block diagram illustrated in FIG. 2 represents an exemplary case in which the number of beams to be formed for the base station 10 and the number of beams to be formed for the terminal device 30 are the same. Here, N is an integer of two or more.

The wireless relay device 20 includes base-station-side antenna element units 21-1 to 21-N, base-station-side beam forming units 22-1 to 22-N, a base-station-side beam control unit 23, a terminal-device-side beam control unit 24, terminal-device-side beam forming units 25-1 to 25-N, addition units 26-1 to 26-N, and terminal-device-side antenna element units 27-1 to 27-N. The base-station-side antenna element units 21-1 to 21-N may be collectively referred to as the base-station-side antenna element unit 21. The base-station-side beam forming units 22-1 to 22-N may be collectively referred to as the base-station-side beam forming unit 22. The terminal-device-side beam forming units 25-1 to 25-N may be collectively referred to as the terminal-device-side beam forming unit 25. The addition units 26-1 to 26-N may be collectively referred to as the addition unit 26. The terminal-device-side antenna element units 27-1 to 27-N may be collectively referred to as the terminal-device-side antenna element unit 27. The functional unit incorporating the base-station-side antenna element units 21-1 to 21-N and the base-station-side beam forming units 22-1 to 22-N is also referred to as a first antenna unit. The functional unit incorporating the terminal-device-side beam forming units 25-1 to 25-N and the terminal-device-side antenna element units 27-1 to 27-N is also referred to as a second antenna unit. The base-station-side beam control unit 23 is also referred to as a first beam control unit. The terminal-device-side beam control unit 24 is also referred to as a second beam control unit.

The base-station-side antenna element unit 21 receives a signal transmitted by the base station 10. The base-station-side antenna element unit 21 is also simply referred to as an antenna element. The base-station-side beam forming unit 22 weights the amplitude and phase of the radio wave of an analog signal received by the base-station-side antenna element unit 21 as instructed by the base-station-side beam control unit 23, thereby adjusting the amplitude and phase of the radio wave. As a result, the base-station-side antenna element unit 21 can form a beam for the base station 10. The first antenna unit is capable of forming a plurality of reception beams for communication with the base station 10. A beam for communication with the base station 10 that the first antenna unit forms is also referred to as a first beam. The base-station-side beam forming unit 22 can form a plurality of beams in different directions simultaneously by using the plurality of base-station-side antenna element units 21 provided for the different directions of beams. The base-station-side beam control unit 23 controls the weight corresponding to each of the base-station-side antenna element units 21. For example, the base-station-side beam control unit 23 controls the antenna element weight of the beam of each layer. A layer is a stream of signals to be simultaneously transmitted in MIMO transmission. In MIMO transmission, each layer is assigned a beam, and a stream of signals is transmitted between the base station 10 and the wireless relay device 20 and between the wireless relay device 20 and the terminal device 30. An antenna element weight is the weight of the amplitude and phase of the radio wave of a signal, which is calculated by analyzing the state of a propagation path between the base station 10 and the terminal device 30 and determining a precoding vector. The base-station-side beam control unit 23 controls the weighting of a plurality of first beams.

The terminal-device-side beam control unit 24 controls the weighting of a plurality of beams. For example, the terminal-device-side beam control unit 24 controls the antenna element weight of each layer that is formed by the second antenna unit. The second antenna unit is capable of forming a plurality of transmission beams for communication with the terminal device 30. A beam for communication with the terminal device 30 that the second antenna unit forms is also referred to as a second beam. Various methods can be used to form terminal device side beams as well as base station side beams. An exemplary method can include detecting an uplink signal from the terminal device 30, estimating an arrival direction for each terminal device 30, and forming a beam. Another exemplary method may include detecting an uplink signal from each terminal device 30, making a transmission line estimation for each antenna, and determining an antenna element weight such that the received power of this signal is maximized. The addition unit 26 adds input signals. The terminal-device-side antenna element unit 27 transmits a signal to the terminal device 30.

The base-station-side beam control unit 23, the terminal-device-side beam control unit 24, and the addition unit 26 are implemented by processing circuitry, i.e., an electronic circuit that performs each process.

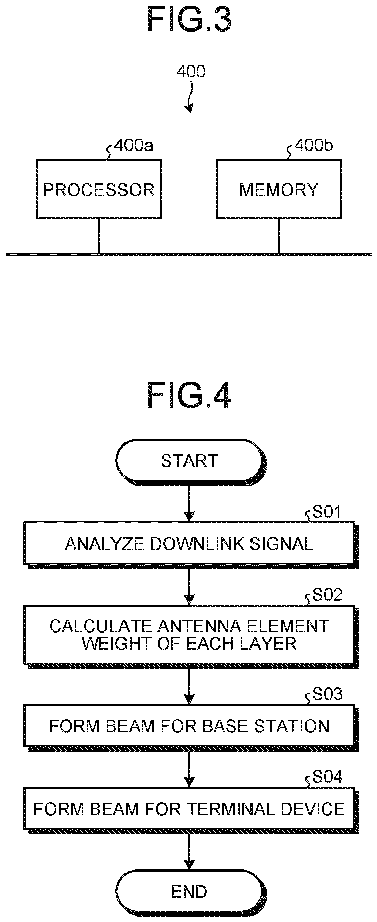

The processing circuitry may be dedicated hardware or a control circuit including a memory and a central processing unit (CPU) that executes programs stored in the memory. The memory as used herein is, for example, a nonvolatile or volatile semiconductor memory such as a random access memory (RAM), a read only memory (ROM), or a flash memory, a magnetic disk, an optical disk, or the like. FIG. 3 is a diagram illustrating a control circuit according to the first embodiment. In a case where the processing circuitry is a control circuit including a CPU, this control circuit is, for example, a control circuit 400 having the configuration illustrated in FIG. 3.

As illustrated in FIG. 3, the control circuit 400 includes a processor 400a, which is a CPU, and a memory 400b. In a case where the processing circuitry is implemented by the control circuit 400 illustrated in FIG. 3, the processor 400a reads and executes the program corresponding to each process stored in the memory 400b, thereby implementing the processing circuitry. The memory 400b is also used as a temporary memory for each process performed by the processor 400a.

The operation of the wireless communication system 1 will be described. FIG. 4 is a flowchart illustrating the operation of the wireless communication system 1 according to the first embodiment. The wireless relay device 20 analyzes propagation paths between the base station 10 and the wireless relay device 20. A method for analyzing propagation paths by the wireless relay device 20 will be described in detail. Suppose that the wireless relay device 20 receives, at B reception antennas, A different known signals transmitted from the base station 10 on different beams. In this case, a transmission line matrix of A×B can be obtained by analyzing information on the known signals. Eigenvalue analysis or the like can be performed on this transmission line matrix to obtain radio wave arrival directions in order of strength. This process of obtaining radio wave arrival directions in order of strength exemplifies a method for analyzing propagation paths. The wireless relay device 20 forms a beam in the direction in which the direct wave from the base station 10 is radiated or in the direction of the reflected wave with large power. The wireless relay device 20 analyzes a downlink signal from the base station 10 received at the base-station-side antenna element unit 21 (step S01). The base-station-side beam control unit 23 calculates the antenna element weight of each layer (step S02).

Information on the antenna element weight calculated by the base-station-side beam control unit 23 is sent to the base-station-side beam forming unit 22. The first antenna unit forms a beam of each layer for the base station 10 (step S03). The terminal-device-side beam control unit 24 calculates a weight for each terminal-device-side antenna element unit 27. The weight information is sent to the terminal-device-side beam forming unit 25, and the second antenna unit forms a beam of each layer for the terminal device 30 using the weight information (step S04). A possible weight determination method for forming a beam for the terminal device 30 is to determine a weight according to whether the beam is directed in the direction of each terminal device 30, directed in a predetermined beam-specific direction, or directed in the direction in which each terminal device 30 can obtain large received power using a reflector such as a wall. The output of the base-station-side beam forming unit 22 is connected on a layer-by-layer basis to the terminal-device-side beam forming unit 25. The base-station-side beam control unit 23 links a plurality of first beams and a plurality of second beams on a layer-by-layer basis. Linking operation means, for example, that the base-station-side beam control unit 23 holds a table in which the weight information of a beam for the base station 10 is stored in association with the weight information of the beam for the terminal device 30 linked with the beam for the base station 10. The wireless relay device 20 relays communication between the base station 10 and the terminal device 30 using the linked first beams and second beams.

In the example described in the present embodiment, the wireless relay device 20 forms beams in the analog domain, but the formation of beams may be implemented in the digital domain. That is, the wireless relay device 20 includes an analog-to-digital (AD) converter and a digital-to-analog (DA) converter, so that the signal of each antenna is converted into a digital signal at the time of reception, and the converted digital signal is converted into an analog signal at the time of transmission. The base-station-side beam forming unit 22 and the terminal-device-side beam forming unit 25 are implemented by digital signal processing. The base-station-side beam control unit 23 and the terminal-device-side beam control unit 24 may apply a fast Fourier transform (FFT) or an inverse fast Fourier transform (IFFT) to digital signal processing. The wireless relay device 20 may control the radiation directions of the first beam and the second beam by using digital signals. The wireless relay device 20 may perform beam formation and beam linking for the base station 10 or the terminal device 30 on a subband-by-subband basis. In other words, the wireless relay device 20 may calculate precoding weights on a subband-by-subband basis. The transmission line matrix obtained by analyzing propagation paths is on an antenna-by-antenna basis, but because of its frequency selectivity, the values differ on a subband-by-subband basis. Therefore, precoding weights can be calculated more precisely by performing transmission line matrix acquisition and eigenvalue analysis on a subband-by-subband basis. A subband is one of the frequency band divisions of a specific band. In 5G, a specific band is 3.6 to 6 GHz, for example.

The present embodiment has described downlink operation, but uplink operation is also implemented in a similar manner. In this case, the values of the antenna element weights for the base station 10 are the same for downlink and uplink, and so are the values of the antenna element weights for the terminal device 30. In a case where the wireless relay device 20 relays communication between the base station 10 and the terminal device 30 using a time division duplex (TDD) scheme, in which the same frequency is used for uplink and downlink, the wireless relay device 20 detects the timing of switching between uplink and downlink to switch between transmission and reception. In a case where the wireless relay device 20 relays communication between the base station 10 and the terminal device 30 using a frequency division duplex (FDD) scheme, the wireless relay device 20 need not switch between transmission and reception, and the same directivity is used for transmission and reception.

As described above, the wireless relay device 20 according to the present embodiment includes the plurality of base-station-side antenna element units 21, the plurality of base-station-side beam forming units 22, the base-station-side beam control unit 23, the terminal-device-side beam control unit 24, the plurality of terminal-device-side beam forming units 25, the plurality of addition units 26, and the plurality of terminal-device-side antenna element units 27. As a result, the wireless relay device 20 can form narrow beams for each of the base station 10 and the terminal device 30. The beams for the base station 10 and the beams for the terminal device 30 can be linked on a layer-by-layer basis. Therefore, the wireless relay device 20 can relay signals of different layers while maintaining isolation therebetween using narrow beams. The wireless relay device 20 can also prevent the propagation paths from degenerating into one. Therefore, the correlation between antennas is high, the estimation of propagation paths is facilitated, and a reduction in transmission capacity can be prevented.

### Second Embodiment.

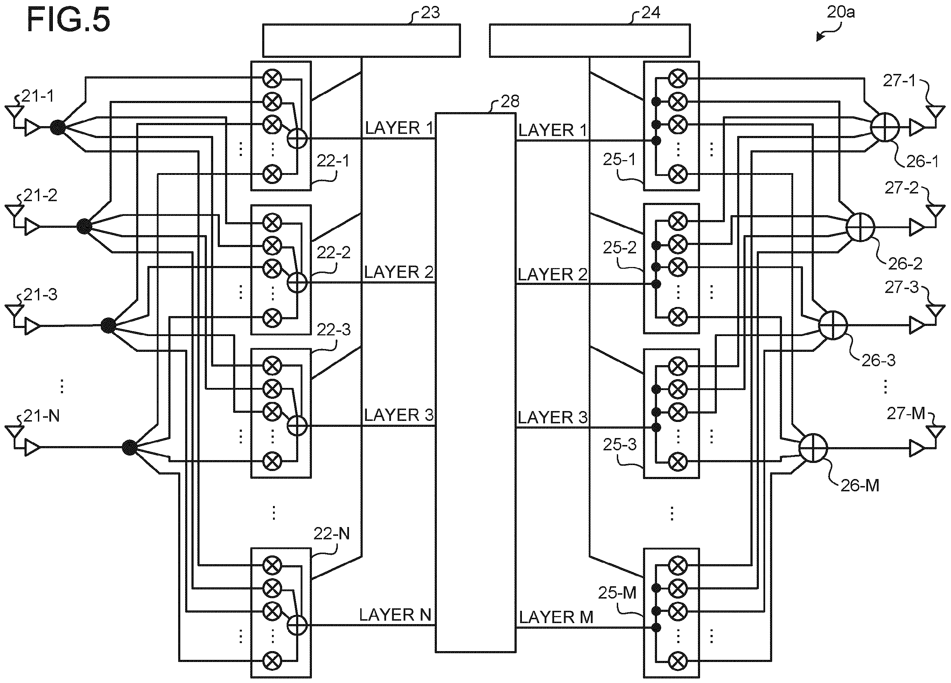

FIG. 5 is a diagram illustrating functional blocks of a wireless relay device according to a second embodiment. In the present embodiment, components having the same functions as those in the first embodiment are denoted by the same reference signs as those in the first embodiment, and redundant explanations are omitted. A wireless relay device 20a according to the present embodiment includes a selection unit 28 between the output of the base-station-side beam forming unit 22 and the terminal-device-side beam forming unit 25. The selection unit 28 selects and manages combinations of beams for the base station 10 and beams for the terminal device 30. The wireless relay device 20a includes M terminal-device-side beam forming units 25, M addition units 26, and M terminal-device-side antenna element units 27.

A method for determining combinations of beams for the base station 10 and beams for the terminal device 30 that are formed by the wireless relay device 20a will be described. In the present embodiment, a downlink output signal from the base-station-side beam forming unit 22 corresponding to a base station side beam i is denoted by aⁱ (t). An input signal to the terminal-device-side beam forming unit 25 on a layer j is denoted by b^{j} (t). The number of beams for the base station 10 is denoted by N. The number of beams for the terminal device 30 is denoted by M. Here, M is an integer of two or more. In addition, i is an integer of N or less. In addition, j is an integer of M or less.

In the case of N=M, the selection unit 28 determines and manages the combinations (i, j) that connect (link) b^{j} (t) and aⁱ (t) for downlink. Note that the same combinations are used for uplink. For example, in the case of N=M=3, the selection unit 28 determines and manages the combinations (i, j) as (1, 1), (2, 2), and (3, 3).

In the case of N<M, the selection unit 28 duplicates the signal aⁱ (t) of the base station side beam i so that N=M is satisfied, and aⁱ (t) is connected (linked) with any of a plurality of terminal device side inputs b^{j1} (t) to b^{jM}(t). In addition, the selection unit 28 determines and manages the linking combinations (i, j₁,... j_{M}). For uplink, the items of information on the layers j₁ to j_{M} are added together and input to the base station side beam i. For example, in the case of N=3 and M=4, the selection unit 28 duplicates the signal aⁱ¹ (t) of the layer 1 derived from the base station 10, and determines and manages the combinations (i, j) as (1, 1), (1, 2), (2, 3), and (3, 4). For uplink, the selection unit 28 adds the items of information on the layers j₁ and j₂ for input to the base station side beam i₁.

In the case of N>M, the selection unit 28 adds a plurality of base station side outputs aⁱ¹ (t) to aⁱ² (t) for connection to the terminal device side input b^{j} (t) so that N=M is satisfied. For example, in the case of N=4 and M=3, the selection unit 28 adds the signals aⁱ¹ (t) and aⁱ² (t) of the layer 1 derived from the base station 10, and determines and manages the linking combinations (i, j) as (1+2, 1), (3, 2), and (4, 3). For uplink, the information on the layer j₁ is duplicated and input to the base station side beam i₁ and the base station side beam i₂.

In a case where the wireless relay device 20a performs beam formation on a subband-by-subband basis, the above-mentioned beam-to-beam connection information (i, j) may be the same combinations for all subbands, or may be determined and managed individually for each subband. In any case, the same beam pairs are used for uplink and downlink.

As described above, the wireless relay device 20a according to the present embodiment can not only achieve the effect of the first embodiment but also determine and manage combinations of beams for the base station 10 and beams for the terminal device 30 according to the number of beams of the base station 10 and the number of beams of the terminal device 30. Therefore, even when the number of beams of the base station 10 and the number of beams of the terminal device 30 are different, the wireless relay device 20a can form beams for each of the base station 10 and the terminal device 30 to perform relaying while maintaining isolation using narrow beams. This makes it possible to prevent the propagation paths from degenerating into one, and prevent the pinhole effect. It is also possible to prevent a reduction in transmission capacity.

### Third Embodiment.

In the present embodiment, a specific beam forming method for the wireless relay device 20a will be disclosed. 5G defines multiple types of reference signals in order to form transmission/reception beams between the base station 10 and the terminal device 30. In a beam forming system that uses narrow beams, it is necessary for the base station 10 and the terminal device 30 to align the beam directions in some way. However, in both transmission and reception, it is not easy to align the directions using narrow beams. For this reason, 5G is designed to enable multi-stage beam control: rough alignment of directions with wide beams followed by fine alignment of directions with narrow beams. Note that subsequent processes such as control of beam combinations and control of beam radiation directions are supposed to be performed by the selection unit 28, but are not necessarily performed by the selection unit 28.

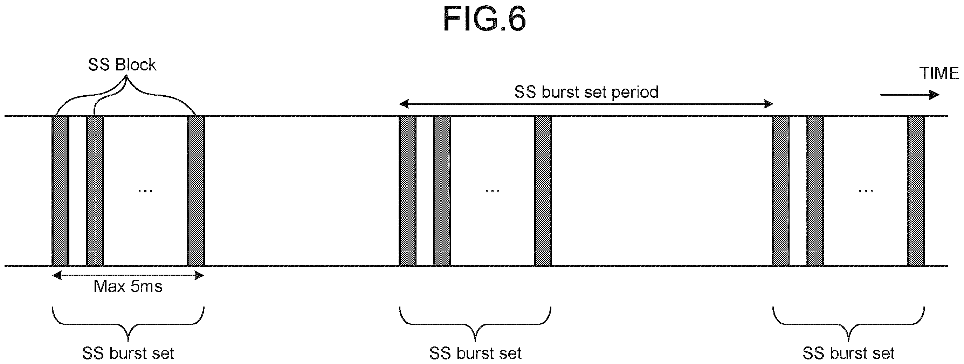

The present embodiment discloses an example of beam directivity control of the wireless relay device 20a through utilization of wide beams from the base station 10. FIG. 6 is a diagram illustrating an example of a 5G frame format according to a third embodiment. In FIG. 6, the horizontal axis represents time. The base station 10 periodically transmits information necessary for initial synchronization, such as synchronization signals (primary synchronization signal (PSS) and secondary synchronization signal (SSS)) or broadcast information (physical broadcast channel (PBCH)). An area containing these signals is called a synchronization signal (SS) block.

As illustrated in FIG. 6, a plurality of SS blocks are arranged in a unit called a synchronization signal (SS) burst set. The base station 10 completes distribution to the entire service area of the base station 10 within one SS burst set. Such distribution is performed periodically, but the interval between periodic distributions is variable. The interval between periodic distributions is changed by a constant for each base station 10 called an SS burst set period. The maximum time length of an SS burst set is less than 5 ms, and an SS burst set period is 5 ms to 160 ms. SS blocks need to be broadcast to the entire service area of the base station 10. However, a system that uses beam forming may sometimes be incapable of simultaneous broadcast to the service area.

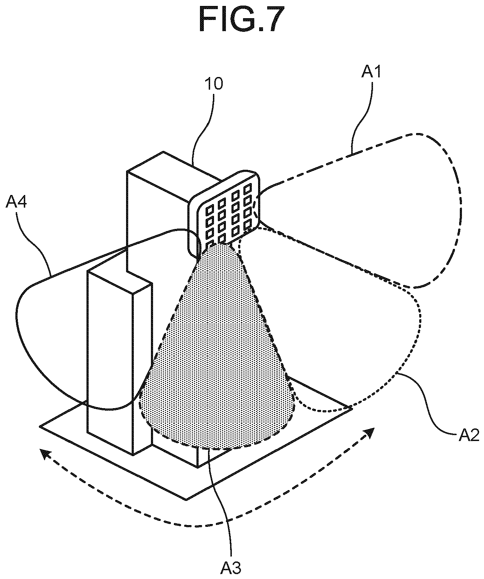

FIG. 7 is a diagram illustrating how the base station 10 according to the third embodiment transmits SS blocks. In a case where the base station 10 is incapable of simultaneous broadcast to the service area, as illustrated in FIG. 7, the base station 10 transmits SS blocks multiple times while changing the beam direction to distribute synchronization signals or broadcast information to the entire service area. In FIG. 7, four beams A1 to A4 are formed, and SS blocks are transmitted while changing the beam direction. The base station 10 illustrated in FIG. 7 is transmitting SS blocks on the A3 beam formed.

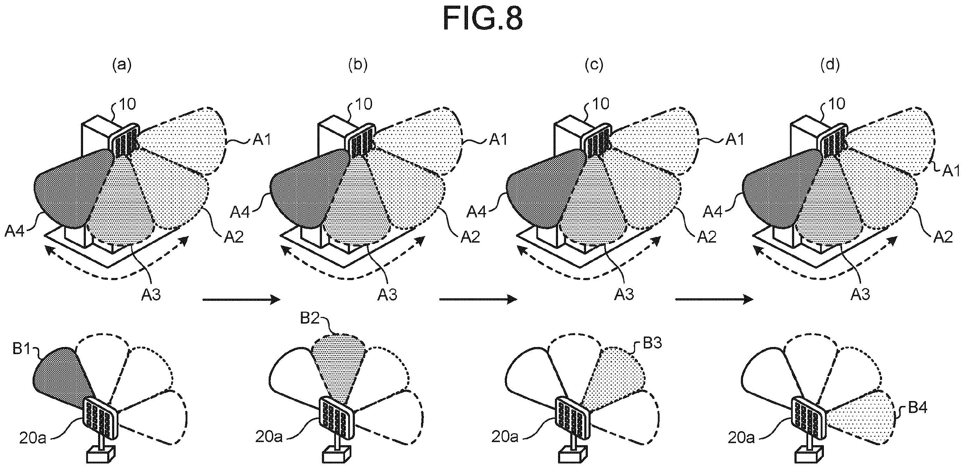

FIG. 8 is a diagram illustrating a procedure for beam directivity formation by the wireless relay device 20a according to the third embodiment. In FIG. 8(a), the wireless relay device 20a forms a directional beam in the direction of B1 using the base-station-side antenna element unit 21, and measures a PSS signal or SSS signal from the base station 10. The base station 10 transmits SS blocks while switching the beam direction. In response to detecting a PSS or SSS signal, the wireless relay device 20a records the received signal strength of the detected signal and the beam index (synchronization signal block index (SSB index)) associated with the detected signal. Beam indexes are exemplified in FIG. 8 by A1 to A4. The wireless relay device 20a may receive signals from a plurality of beams (within 5 ms) of the base station 10 depending on the directivity of reception beams or the surrounding environment. Therefore, it is desirable that the wireless relay device 20a measure the duration of a plurality of SS burst set periods during signal detection to ensure detection accuracy.

Next, in FIG. 8(b), the wireless relay device 20a changes the directivity of the base-station-side antenna element unit 21 and switches to the beam B2. After that, the wireless relay device 20a measures PSS or SSS and records the beam index and the received signal strength in a similar manner to that in FIG. 8(a). Next, in FIG. 8(c), the directivity of the base-station-side antenna element unit 21 of the wireless relay device 20a is likewise changed to B3, and a similar measurement is performed. Further, in FIG. 8(d), the directivity of the base-station-side antenna element unit 21 is changed to B4, and a similar measurement is performed.

After the measurement of all the beams selectable by the base-station-side antenna element unit 21 of the wireless relay device 20a or of the beams predetermined for base station search is completed, the recorded pairs of beam numbers of the wireless relay device 20a (B1 to B4 in the example of FIG. 8) and beam indexes are sorted by the received signal power of synchronization signals. The wireless relay device 20a sets a threshold with a specific signal-to-noise (SN) ratio, and extracts a beam pair that exceeds the set threshold. In an exemplary case of FIG. 8, assuming that the pairs (A4, B1: power P1), (A3, B2: power P2), (A2, B2: power P3), and (A1, B3: power P4) exceed the threshold, B1, B2, and B3 are candidates for the directional beams of the wireless relay device 20a. In this case, B4 is not selected as a candidate because the received signal power of the pair of A1 and B4 is smaller than that of the pair of A1 and B3. P1 to P4 are the values of the maximum received signal power in the corresponding pairs.

The wireless relay device 20a selects beams for use from among the candidate beams according to the number of beams N formable by the base-station-side antenna element unit 21. In principle, beams for use should be selected in order of received signal power. For example, in the case of N=2 and using the example of FIG. 8, if the magnitude relationship of received signal power is P1>P2>P3>P4, the wireless relay device 20a selects B1 and B2 corresponding to P1 and P2 as the beams for the base station 10. However, in a MIMO environment, selecting highly-isolated beams can be better than selecting beams with large received signal power in terms of increasing transmission capacity. In this case, in order to use A4 and A1 as the beams of the base station 10, the wireless relay device 20a may select B1 and B3. A method for selecting highly-isolated beams is to select a combination of beams of the base station 10 with separate beam indexes, or to select a combination of beams of the base station 10 with separate radiation directions. However, these are non-limiting examples and various other selection criteria can be applied. In a case where the number of beams that exceed the threshold is less than N, a beam other than the candidates may be selected.

As described above, according to the present embodiment, the wireless relay device 20a can form beams on high-gain propagation paths, and the wireless relay device 20a can prevent a reduction in transmission capacity between the base station 10 and the terminal device 30.

### Fourth Embodiment.

The present embodiment describes exemplary methods for setting the beam radiation directions of the terminal-device-side antenna element unit 27 of the wireless relay device 20a. The first setting method is to form beams for the terminal device 30 in predetermined directions so as to place importance on the isolation of beams for the terminal device 30. It is considered that the radiation directions of the terminal-device-side antenna element unit 27 and the isolation of the beams to be formed can be estimated at the time of installation of the wireless relay device 20a. An example of an index that quantitatively represents isolation is the correlation between antennas. The correlation between antennas is mainly determined by the directivity of antennas (radiation directions of antennas), the distance between antennas, the number of reflected waves (reflection points), the strength of reflected waves (material of walls or reflection points), and the frequency band of transmission/reception signals. Therefore, the correlation between antennas can be estimated based on the design of the directivity of the antennas of the wireless relay device 20a and the distance between the antennas. In addition, the correlation between antennas can be estimated by the installer of the wireless relay device 20a based on the conditions of the installation location of the wireless relay device 20a, such as a narrow indoor space or an outdoor location with a large number of buildings. Therefore, the radiation directions of the terminal-device-side antenna element unit 27 and the isolation of the beams to be formed can be estimated by the installer. Thus, after installing the wireless relay device 20a, the installer sets beams having a low inter-antenna correlation in the selection unit 28 based on the estimation result, so that the selection unit 28 can select terminal device side beams having a low inter-antenna correlation. As a result, the selection unit 28 can fixedly select M beams having a low inter-antenna correlation regardless of the position of the terminal device 30.

In addition, the correlation between antennas can be estimated after the operation of the wireless relay device 20a is started by receiving signals from the base station 10 and the terminal device 30 and making a transmission line estimation. A method for estimating the correlation between the antennas of the wireless relay device 20a after the operation thereof is started will be described. For example, suppose that signals transmitted from a specific antenna of one device are received by the antenna x and the antenna y of the other device. The antenna x and the antenna y of the other device each acquire signals from the one device continuously in the time direction, whereby the time-series signal rx(n) of the antenna x and the time-series signal ry(n) of the antenna y are obtained. The correlation between the antenna x and the antenna y can be estimated by calculating the cross-correlation between rx(n) and ry(n), and the estimation result is the correlation between the antennas. Note that subsequent processes such as control of beam combinations, control of beam radiation directions, and estimation of isolation after the operation start of the wireless relay device 20a are supposed to be performed by the selection unit 28, but are not necessarily performed by the selection unit 28.

The second setting method is to measure the received signal power of signals transmitted from the terminal device 30 to set the radiation directions of beams to directions with high received signal power. Steady signal transmission is guaranteed from the base station 10, but not guaranteed from the terminal device 30. Therefore, the selection unit 28 of the wireless relay device 20a measures received signal power for a certain period of time to measure the received signal power of signals from the terminal device 30 and record the maximum value of instantaneous power. Here, instantaneous power is the minimum unit at which the average transmission power of the terminal device 30 can be obtained, and corresponds to the orthogonal frequency division multiplexing (OFDM) symbol length in 5G. In 5G, with a subcarrier width of 15 kHz, the OFDM symbol length corresponds to about 70 microseconds but varies depending on the subcarrier width setting of the base station 10. Therefore, it is desirable that the maximum value of instantaneous power be evaluated with average power over about 100 microseconds. When measuring the received signal power of signals from the terminal device 30, the wireless relay device 20a cannot analyze the contents of signals. Therefore, it is difficult to identify the terminal device 30 using received signals. Thus, for example, the wireless relay device 20a can change the radiation directions of beams for the terminal device 30 at regular time intervals, e.g. intervals of one second, in directivity setting mode, and record the received signal power (maximum value of instantaneous power) of each beam. In addition, the wireless relay device 20a can select M beams in descending order of received signal power from all-directional measurement results.

As described above, according to the present embodiment, the wireless relay device 20a can also select high-gain beams for the terminal device 30, and the wireless relay device 20a can prevent a reduction in transmission capacity between the base station 10 and the terminal device 30.

The configurations described in the above-mentioned embodiments indicate examples of the contents of the present invention. The configurations can be combined with another well-known technique, and some of the configurations can be omitted or changed in a range not departing from the gist of the present invention.

### Reference Signs List

1 wireless communication system; 10 base station; 20, 20a wireless relay device; 21, 21-1 to 21-N base-station-side antenna element unit; 22, 22-1 to 22-N base-station-side beam forming unit; 23 base-station-side beam control unit; 24 terminal-device-side beam control unit; 25, 25-1 to 25-N terminal-device-side beam forming unit; 26, 26-1 to 26-N addition unit; 27, 27-1 to 27-N terminal-device-side antenna element unit; 28 selection unit; 30 terminal device; 400 control circuit; 400a processor; 400b memory.

## Claims

1. A wireless relay device comprising:
a first antenna unit capable of forming a plurality of first beams for communication with a base station; and
a second antenna unit capable of forming a plurality of second beams for communication with a terminal device, wherein
the plurality of first beams and the plurality of second beams are linked with each other, and the wireless relay device relays communication between the base station and the terminal device using the first beams and the second beams linked.

2. The wireless relay device according to claim 1, wherein
the first beams and the second beams are formed on a subband-by-subband basis, and
the first beams and the second beams are linked on a subband-by-subband basis.

3. The wireless relay device according to claim 1 or 2, comprising
a selection unit to select a combination for linking the first beams and the second beams, wherein
when the number of first beams is less than the number of second beams, the selection unit duplicates any of signals that are transmitted and received by the plurality of first beams to form a duplicated signal, and performs beam linking using the duplicated signal.

4. The wireless relay device according to claim 3, wherein
when the number of first beams is greater than the number of second beams, the selection unit adds together signals that are transmitted and received by the second beams to form an addition signal, and performs beam linking using the addition signal.

5. The wireless relay device according to claim 3, wherein
the selection unit receives, on each of the first beams, a synchronization signal transmitted by the base station, and determines combinations of beams that the base station forms and the first beams in descending order of received signal power of the synchronization signal.

6. The wireless relay device according to any one of claims 3 to 5, wherein
the selection unit receives, on each of the first beams, a synchronization signal transmitted by the base station, extracts combinations of beams that the base station forms and the first beams with which received signal power of the synchronization signal exceeds a threshold, and selects, from among the combinations, a combination in which beam indexes of beams that the base station forms are separate from each other.

7. The wireless relay device according to any one of claims 3 to 5, wherein
the selection unit receives, on each of the first beams, a synchronization signal transmitted by the base station, extracts combinations of beams that the base station forms and the first beams with which received signal power of the synchronization signal exceeds a threshold, and selects, from among the combinations, a combination in which radiation directions of beams that the base station forms are separate from each other.

8. The wireless relay device according to any one of claims 3 to 7, wherein
the second beams for use in communication with the terminal device are selected based on a radiation direction of an antenna element that transmits a signal to the terminal device.

9. The wireless relay device according to any one of claims 3 to 8, wherein
the selection unit changes a radiation direction of the second beams at regular time intervals, and selects the second beams for use in communication with the terminal device in descending order of received signal power of a second signal received on each of the second beams.

10. A wireless communication system comprising:
the wireless relay device according to any one of claims 1 to 9;
a base station to communicate with the wireless relay device; and
a terminal device to communicate with the wireless relay device, wherein
the wireless relay device is configured to:
communicate with the base station using a plurality of first beams formed for communication with the base station; and
communicate with the terminal device using a plurality of second beams formed for communication with the terminal device, and
the plurality of first beams and the plurality of second beams are linked with each other.
